# EUROPEAN PATENT SPECIFICATION

(11) **EP 1 819 510 B1**
(45) Date of publication and mention of the grant of the patent: **04.07.2012**
(21) Application number: 05852307.7
(22) Date of filing: 28.11.2005
(51) Int. Cl.: B32B 27/20, B32B 27/32, G09F 3/04

(54) **COEXTRUDED MULTILAYER COLORED FILMS**
COEXTRUDIERTE FARBIGE MEHRSCHICHTIGE FILME
FILMS COLORES MULTICOUCHES COEXTRUDES

(30) Priority: 29.11.2004 US 631314 P
(43) Date of publication of application: 22.08.2007
(73) Proprietor: Avery Dennison Corporation, Pasadena, CA 91103 (US)
(72) Inventor: BOYD, Dana, M, Rushville, NY 14544 (US); MIENTUS, Bernard, S, Painesville, OH 44077 (US); RAJAN, Sunder, R, Mentor, OH 44060 (US)
(74) Representative: Brouwer, Hendrik Rogier
(86) International application number: PCT/US2005/042964
(87) International publication number: WO 2006/058301

(56) References cited:
- EP-A- 0 441 694
- US-A- 4 263 080
- US-A- 4 758 462
- US-A- 5 176 954
- US-A- 5 178 942
- US-A- 5 766 712
- US-A1- 2003 021 930
- US-A1- 2003 021 981
- PATENT ABSTRACTS OF JAPAN vol. 2000, no. 08, 6 October 2000 (2000-10-06) & JP 2000 135757 A (SHIN KOBE ELECTRIC MACH CO LTD), 16 May 2000 (2000-05-16)

## Description

This application claims the benefit of U. S. Provisional Application No. 60/631,314 filed November 29, 2004.

### Field of the Invention

This invention relates to coextruded multilayer films, and more particularly to coextruded multilayer films having an opacity of at least 75% as defined in claim 1.

### Background of the Invention

A variety of polymer films have been typically used for signs in graphic applications. One polymer film that is typically used in these graphic applications is a calendered or dispersion cast polyvinylchloride (PVC) film. While the use of these PVC films has met with success in the marketplace, the films have not been entirely acceptable because they are environmentally unfriendly. Many of the PVC films employ plasticizers that migrate into adhesive layers joined thereto and degrade the functionality of the adhesive composite. Plasticizer migration is also considered to be related to objectionable spotty film appearance, sometimes referred to as mottle. This problem especially is troublesome in warm weather climates. There is also a need for films useful in window graphic applications which require the same color on both sides of the film. In these applications, the graphic may be put on the outside or the inside of the window. In some applications, the films utilized for window graphics comprise at least three layers of coextruded polyolefin, and when the films utilize organic pigments for colors such as red, orange, and yellows rather than the chromium, lead and cadmium heavy metal pigments, the films become quite expensive for use. Accordingly, there is a need for multilayer films for use in signage and graphic applications, automotive synthetic paints, decaling and banner materials which utilize organic pigments, but at reduced costs.

### Summary of the Invention

This invention relates to a coextruded multilayer film having an opacity of at least 75% and comprising:
(A) an opaque thermoplastic polymer core having a first outer surface and a second outer surface;
(B) a first pigmented color layer overlying the core and having a first surface and a second surface; and
(C) a second pigmented color layer underlying the core and having a first surface and a second surface
wherein the composition of the core is different from the compositions of the first and second color layers, and the first and second color layers are not white, black or gray as defined in claim 1.

In one embodiment, the opaque core comprises at least one thermoplastic polymer and white pigment, black pigment, or a compounded mixture of white and black pigments, and the first pigmented color layer and the second pigmented color layer contain organic pigments. The coextruded opaque multilayer films of the invention also may comprise in an embodiment a first and/or second skin layers overlying respectively the first and/or second pigmented color layers, in another embodiment a layer of adhesive underlying the second pigmented color layer, and in a further embodiment a release liner underlying the layer of adhesive.

By utilizing inexpensive pigments to provide the opaque polymer core, the color layer thickness can be reduced while maintaining the desired overall opacity and color. Accordingly, desired opaque color films can be prepared at reduced costs. In an embodiment of the present invention defined in the claims, a method to vary the color of the outer surfaces of a multilayered opaque film, comprises providing an opaque multilayered film comprising (A) an opaque core having a first outer surface and a second outer surface, and comprising at least one thermoplastic polymer and white, black, or a compounded mixture of white and black pigments; (B) a first pigmented color layer overlying the core and having a first surface and a second surface; and (C) a second pigmented color layer underlying the core and having a first surface and a second surface wherein the composition of the core is different from the compositions of the first and second color layers, the first and second color layers are not white, black or gray, and the film has an opacity of at least 75%, and wherein the shade or lightness of the core can be varied from white to black.

### Brief Description of the Drawings

Fig. 1 is a schematic cross sectional view of a three layer film of the invention.
Fig. 2 is a schematic cross sectional view of a five layer film of the invention.
Fig. 3 is a schematic cross sectional view of another five layer film of the invention.
Fig. 4 is a schematic cross sectional view of a seven layer film of the invention.
Fig. 5 is a schematic cross sectional view of an adhesive composite of the invention.

### Description of the Embodiments

The coextruded opaque multilayer films of the present invention, in one embodiment as defined in claim 1, have an opacity of at least 75% and comprise:
(A) an opaque thermoplastic polymer core having a first outer surface and a second outer surface;
(B) a first pigmented color layer overlying the core and having a first surface and a second surface; and
(C) a second pigmented color layer underlying the core and having a first surface and a second surface
wherein the composition of the core is different from the compositions of the first and second color layers, and the first and second color layers are not white, black or gray.

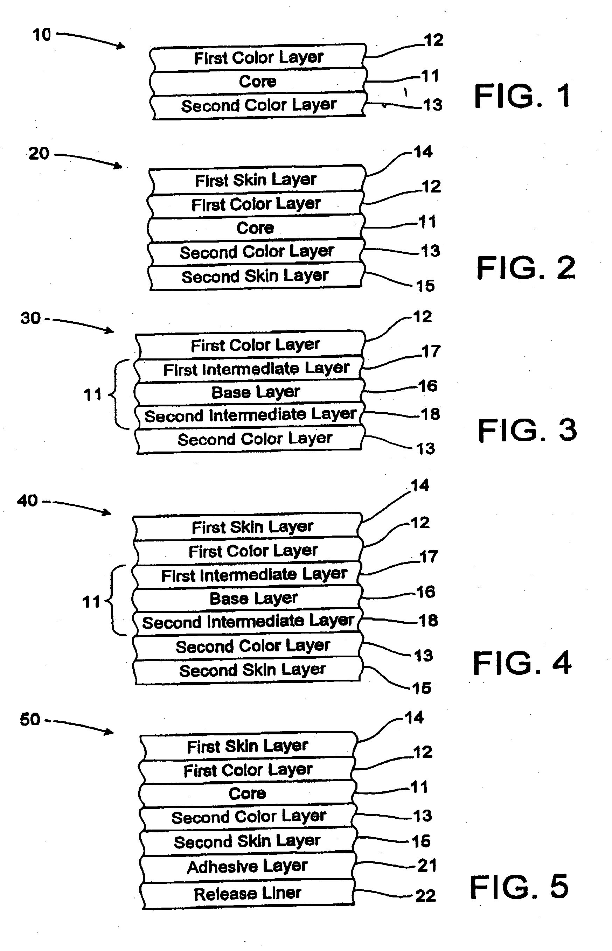

In one embodiment, the coextruded opaque multilayer film comprises three layers as described above, namely, an opaque thermoplastic core layer and first and second pigmented color layers on the two surfaces of the core layer, provided that the first and second color layers are different from the core and are not white, black or gray. The core can differ in composition from the color layers based on thermoplastic polymer composition to include amount and type of thermoplastic polymer, additive composition to include amount and type of an additive such as e. g. a pigment, or a combination thereof. In an embodiment of the invention the core can differ in composition from the color layers in the amount of pigment, the color of pigment, or a combination thereof. In several embodiments of the invention the core can differ from the color layers in composition by containing a greater amount of pigment than the color layers, by containing a greater amount of pigment than the color layers where the pigment in the core is different in color from the pigment in the color layers, or by containing a greater amount of pigment than the color layers where the pigment in the core is different in color from the pigment in the color layers and where the color of the core can range in shade or lightness from white through various shades of gray to black. Thus, the core in one embodiment may have any color such as white, black, gray, red, orange, etc. In one embodiment, the opaque thermoplastic polymer core comprises a thermoplastic polymer and an inexpensive inorganic pigment such as a white pigment, black pigment or a compounded mixture of white and black pigment to produce a gray color. Such a three layer film is illustrated in Fig. 1 where the film 10 contains a core 11, a first color layer 12 overlying and in contact with the core 11, and a second color layer 13 underlying and in contact with the core. The terms overlying and underlying as used throughout this application to describe the physical relation of two layers mean that one layer can partially or fully cover the second layer and that either the two layers can be in direct contact with each other or one or more other layers can be between the two layers.

The thermoplastic polymer utilized in the opaque core may comprise one or more thermoplastic polymers and, in another embodiment, the thermoplastic polymer can have a melting point in the range of from about 70°C to about 175°C. The thermoplastic polymer can comprise a polyolefin which can be prepared from alkenes having 2-30 carbon atoms where the polyolefin can comprise a homopolymer and/or copolymer from 2 or more alkene monomers such as e.g. a polypropylene homopolymer or a linear low density polyethylene; a poly(alkyl (meth)acrylate) which can comprise a poly(alkyl methacrylate) such as e. g. a poly(ethyl methacrylate), a poly(alkyl acrylate), a copolymer of an alkyl methacrylate and an alkyl acrylate, or mixtures thereof; a styrene-based homopolymer or copolymer; a halocarbon polymer such as a poly(vinyl chloride); a polyamide; a polyurethane; an alkene-vinyl carboxylate copolymer such as e. g. an ethylene-vinyl acetate (EVA) copolymer; an acrylonitrile-based homopolymer or copolymer; a cyclic olefin homopolymer or copolymer; an ionomer comprising a metal-containing salt of an alkene-(meth)acrylic acid copolymer; a polyester, or a combination of any of the foregoing thermoplastic polymers. In an embodiment of the invention the core can comprise at least one polyolefin. Examples of useful thermoplastic polymers include polyolefins such as polyethylene, polypropylene, polybutylene, and copolymers of ethylene, propylene or butylene with an alpha olefin or blends of two or more thereof. The alpha olefin is selected from those alpha olefins containing from about 2 to about 18 carbon atoms and in one embodiment from about 4 to 12 carbon atoms. In the further embodiment, the alpha olefins contain from about 4 to 8 carbon atoms. Examples of useful alpha olefins include 1-butene, 1-hexene, 4 methyl-1 pentene, and 1-octene. The polyolefins useful in the core may be made from a blend of polyolefins such as a polyethylene and an ethylene-propylene copolymer. Very low density polyethylenes (VLDPE), low density polyethylenes (LDPE), medium density polyethylenes (MDPE), linear low density polyethylenes (LLDPE), high density polyethylenes (HDPE), and blends of two or more thereof also are useful. Specific examples of useful polyolefins include those prepared using a Ziegler-Natta catalysts or a metallocene catalysts. A variety of useful polyolefins are available from Huntsman Products, and a specific example includes Huntsman MDPE PE-1080 which is identified as a polyethylene having a density of 0.93 g/cc.

The thermoplastic polymers included in the core in another embodiment may comprise polyolefin elastomers which have been referred to as plastomers. In one embodiment, the polyolefin elastomers have a melt flow index from about 1 to about 100, or from about 3 to about 35, or from about 5 to about 25 g/10 min. The melt flow index is determined by ASTM test D-1238 at 190°C. In one embodiment, the melt flow index for a polyolefin elastomer is in the range from about 1 to about 25, or from about 2 to about 10 g/10 min. In another embodiment, the polyolefin elastomers have a molecular weight of about 5,000 to about 50,000, or of about 20,000 to about 30,000. Densities of the polymers and copolymers described herein are determined in accordance with ASTM D1505. The polyolefin elastomers include polyolefin polymers which exhibit both thermoplastic and elastomeric characteristics. These elastomers include copolymers and terpolymers of ethylene with one or more alpha-olefins containing 3 or more carbon atoms, and copolymers and terpolymers of propylene with one or more alpha olefins containing 2 or 4 or more carbon atoms. The copolymers typically comprises from about 2% to about 30%, or from about 5% to about 25%, or from about 10% to about 20% by weight of the alpha-olefin. The alpha olefins include ethylene, propylene, 1-butene, isobutylene 1-pentene, 1-hexene, 1-heptene, 1-octene, 1-nonene, 1-decene, and 1-dodecene. Particularly useful alpha olefins include 1-butene, 1-hexene and 1-octene. Polyolefin elastomers include but are not limited to ethylene-butene copolymers, ethylene-octene copolymers, ethylene-hexene copolymers, and ethylene-hexene-butene terpolymers, as well as mixtures thereof. The copolymers and terpolymers may be obtained by copolymerization of ethylene or propylene with an alpha olefin, such as 1-butene, using single-site metallocene catalysts. Such copolymers are available from Exxon Mobil Chemical Company under the general trade designation EXACT, and Dow Chemical Company under the general trade designation AFFINITY. Another useful propylene and 1-butene copolymer is available commercially from Basell under the trade designation EP3C30HF. This copolymer has 14% polybutene and a melt flow index of about 5.5 g/10 min. Non-limiting examples of polyolefin elastomers from Exxon Mobil Chemical Company include: linear ethylene-butene copolymers such as EXACT 3024 having a density of about 0.905 gms/cc and a melt index of about 4.5 g/10 min. EXACT 3027 having a density of about 0.900 gms/cc and a melt index of about 3.5 g/10 min. EXACT 4011 having a density of about 0.888 gms/cc and a melt index of about 2.2 g/10 min. and EXACT 4049 having a density of about 0.873 gms/cc and a melt index of about 4.5 g/10 min. and ethylene-hexene copolymers such as EXACT 4150 having a density of about 0.895 gms/cc and a melt index of about 3.5 g/10 min. Other non-limiting examples of useful EXACT plastomers are EXACT 3017 and EXACT 4053. Plastomers sold by Dow Chemical Co. under the tradename AFFINITY are believed to be produced in accordance with U.S. Pat. No. 5,272,236. In one embodiment, these plastomers are substantially linear polymers having a density of about 0.85 gms/cc to about 0.97 g/cc measured in accordance with ASTM D-792, a melt index ("MI") of about 0.01 gms/10 minutes to about 1000 grams/10 minutes, a melt flow ratio (I10/I2) of about 7 to about 20, where I10 is measured in accordance with ASTM D-1238 (I90/10) and I2 is measured in accordance with ASTM D-1238. These plastomers include homopolymers of C₂-C₂₀ olefins such as ethylene, propylene, 4-methyl-1-pentene, and the like, or they can be interpolymers of ethylene with at least one C₃-C₂₀ alpha-olefin and/or C₂-C₂₀ acetylenically unsaturated monomer and/or C₄-C₁₈ alpha-olefins. These plastomers generally have a polymer backbone that is either unsubstituted or substituted with up to 3 long chain branches/1000 carbons. As used herein, long chain branching means a chain length of at least about 6 carbons, above which the length cannot be distinguished using C₁₃ nuclear magnetic resonance spectroscopy. Useful AFFINITY plastomers are characterized by a saturated ethylene-octene backbone, and a narrow level of crystallinity. These plastomers also are compatible with pigments, brightening agents, fillers such as carbon black, calcium carbonate and silica, as well as with plasticizers such as paraffinic process oil and naphthenic process oil. Other commercially available plastomers may be useful in the invention, including those manufactured by Mitsui. Non-limiting examples of plastomers available from Dow include AFFINITY PF 1140 having a density of about 0.897 gms/cc, and a melt flow index of about 0.5 g/10 mins; AFFINITY PF 1146 having a density of about 0.90 gms/cc, and a melt index of about 1 gms/10 min; AFFINITY PL 1880 having a density of about 0.902 gms/cc, and melt index of about 1.0 gms/10 min; AFFINITY EG 8100 having a density of about 0.87 gms/cc, and a melt index of about 1 gms/10 min.; AFFINITY EG 8150 having a density of about 0.868 gms/cc, and a melt index of about 0.5 gms/10 min,; AFFINITY EG 8200 having a density of about 0.87 gms/cc, and a melt index of about 5 g/10 min.; and AFFINITY KC 8552 having a density of about 0.87 gms/cc, and a melt index of about 5 g/10 min. Terpolymers of e.g. ethylene, butene and hexene also can be used in the core of the multilayer films of the invention. Examples of terpolymers are Exxon's EXACT 3006 (an ethylene-butene-hexene terpolymer with a density of 0.910 g/cm³ (g/cc) and M.F.I. of 1.2 g/10 min (g/10')); EXACT 3016 (an ethylene-butene-hexene terpolymer having a density of 0.910 g/cm³ (g/cc) and a M.F.I. of 4.5 g/10 min (g/10')); EXACT 3033 (an ethylene-butene-hexene terpolymer having a density of 0.900 g/cm³ (g/cc) and a M.F.I. of 1.2 g/10 min (g/10')); and EXACT 3034 (an ethylene-butene-hexene terpolymer having a density of 0.900 g/cm³ (g/cc) and a M.F.I. of 3.5 g/10 min (g/10')). Examples of useful terpolymers available from Dow include AFFINITY PL 1840 (an ethylene-propylene-butylene terpolymer); AFFINITY PL 1845 (an ethylene-propylene-butylene terpolymer); and AFFINITY PL 1850 (an ethylene-propylene-butylene terpolymer). In one embodiment, the polyolefin elastomers useful in the core of the multilayer films of the invention include those formed by a single-site metallocene catalyst such as those disclosed in EP 29368, U.S. Pat. No. 4,752,597, U.S. Pat. No. 4,808,561, and U.S. Pat. No. 4,937,299. As is known in the art, plastomers can be produced by metallocene catalysis using a high pressure process by polymerizing ethylene in combination with other monomers such as butene-1, hexene-1, octene-1 and 4-methyl-1-pentene in the presence of catalyst system comprising a cyclopentadienyl-transition metal compound and an alumoxane.

The thermoplastic polymer of the core of the multilayer films of the invention may, in one embodiment, comprise at least one propylene homopolymer, propylene copolymer or blend of two or more thereof. A number of useful propylene homopolymers are available commercially from a variety of sources, and these include: 5390N (Dow Chemical), SE66R (Dow Chemical), 3622 (Atofina), 3576X (Atofina), Moplen HP400N (Basell), P4G4K-038 (Huntsman), and 9074 MED (Exxon Mobil). In one embodiment, useful propylene copolymers may comprise polymers of propylene and up to about 40% by weight of at least one alpha-olefin selected from ethylene and alpha-olefins containing from 4 to about 12, or from 4 to about 8 carbon atoms. Examples of useful alpha-olefins include ethylene, 1-butene, 1-pentene, 4-methyl-1-pentene, 1-hexene, 1-heptene, and 1-octene. In one embodiment, the polymers of propylene which are utilized in the present invention comprise polymers of propylene with ethylene, 1-butene, 1-hexene or 1-octene. The propylene alpha-olefin polymers useful in the present invention include random as well as block copolymers although the random copolymers generally are particularly useful. In one embodiment, the films are free of impact copolymers. Blends of two or more propylene copolymers as well as blends of the propylene copolymers with propylene homopolymers can be utilized. In one embodiment, the propylene copolymers are propylene-ethylene copolymers with ethylenic contents from about 0.2% to about 10% by weight. In another embodiment, the ethylene content is from about 3% to about 10% by weight, or from about 3% to about 6% by weight. With regard to the propylene-1-butene copolymers, 1-butene contents of up to about 15% by weight are useful. In one embodiment, the 1-butene content generally may range from about 3% by weight up to about 15% by weight, and in other embodiments, the range may be from about 5% to about 15% by weight. Propylene-1-hexene copolymers may contain up to about 35% by weight 1-hexene. In one embodiment, the amount of 1-hexene is up to about 25% by weight. Propylene-1-octene copolymers useful in the present invention may contain up to about 40% by weight of 1-octene. More often, the propylene-1-octene copolymers will contain up to about 20% by weight of 1-octene. The propylene copolymers useful in preparing the film facestock of the present invention may be prepared by techniques well known to those skilled in the art. For example, the copolymers useful in the present invention may be obtained by copolymerization of propylene with an alpha-olefin such as ethylene or 1-butene using single-site metallocene catalysts. Some useful commercially available propylene copolymers include: DS6D21 (Dow Chemical), KB4560 (BP Amoco), KB4586 (BP Amoco), KB4986 (BP Amoco), 9433 (BP Amoco), 13T25A (Huntsman), P5M4K-046 (Huntsman), and P5M5K-047 (Huntsman).

In one embodiment, the core comprises, in addition to one or more polyolefins, a second thermoplastic polymer material comprising an alkene-vinyl carboxylic acid ester copolymer such as e. g. an ethylene-vinyl acetate copolymer, an alkene-unsaturated carboxylic acid or anhydride copolymer such as e. g. an ethylene-acrylic acid copolymer or an ethylene-methacrylic acid copolymer, an ionomer derived from metal including sodium, lithium or zinc and an alkene-unsaturated carboxylic acid or anhydride copolymer such as e. g. a sodium salt of an ethylene-methacrylic acid copolymer, an alkene-alkyl unsaturated carboxylic acid ester copolymer such as e. g. an ethylene-methyl acrylate or methacrylate copolymer, or combinations of two or more thereof. The concentration of the second thermoplastic polymer material in the core may range from about 1% to about 40%, and in one embodiment is from about 2% to about 30% by weight based on the weight of the core. Examples of ethylene-vinyl acetate copolymers that can be utilized as the second polymer in the core include those available from DuPont under the trade designation Elvax. Examples include Elvax 3169 (18% VA, MI=1.5) Elvax 3170 (18% VA, MI = 2.5) and Elvax 3174 (17% VA, MI = 8.0). Other useful commercially available ethylene-vinyl acetate copolymers include EQUISTAR EVA 240F (available from EQUISTAR and containing 18% VA), and AT Plastics EVA 1821 which contains 18% vinyl acetate. The ionomer resins are available, for example, from DuPont under the tradename Surlyn. These resins are identified as being derived from sodium, magnesium, lithium or zinc and copolymers of ethylene and methacrylic acid. Included in this group are: the sodium containing ionomers available under the Surlyn name with the following designations: 1601, 1605, 1707, 1802, 1901 AD-8548, 8020, 8140, etc. Examples of zinc containing ionomers available under the Surlyn name are 1650, 1652, 1702, 1705, 1855, 1857, 9950, 9970, etc. Lithium containing ionomers are available from DuPont under the Surlyn name include AD-8546, 7930 and 7940. Useful ionomer resins also are available from A. Schulman under the tradename Clarix, and from Exxon Mobil under the tradename Iotek. Ethylene-methacrylic acid copolymers are available, for example, from DuPont under the tradename Nucrel. Specific examples include Nucrel 0407 which has a methacrylic acid content of 4% by weight and a melting point of 109°C, and Nucrel 0910 which is a methacrylic acid content of 8.7% by weight and a melting point of 100°C. Ethylene-acrylic acid copolymers that are useful include copolymers available from Dow Chemical under the tradename Primacor. These include Primacor 1430 which has an acrylic acid monomer content of 9.5% by weight and a melting point of 97°C.

As noted above, the core of the multilayer film of the present invention is opaque. In one embodiment, the core is rendered opaque by the inclusion of one or more pigments into the thermoplastic polymer. The amount of pigment included in the core may vary over a wide range provided that the core is opaque and the multilayer film incorporating the core has an opacity of at least 75%, and in other embodiments of the film can have an opacity of at least 80%, 85%, or 90%. The pigments which may be included in the core may be metallic pigments, metallic powders such as aluminum, heavy metal-based pigments, heavy-metal free pigments or organic pigments. A heavy metal is defined herein as including lead, cadmium, chromium or antimony. The metallic pigments include titanium dioxide, both rutile and anatase crystal structure. The titanium dioxide may be coated or uncoated (e.g., aluminum oxide coated titanium dioxide). In one embodiment, the pigments utilized in the core are either non-heavy metallic or organic pigments. Since color layers of the desired color are used on both sides of the core, the core can be rendered opaque by incorporating relatively inexpensive pigments such as carbon and the non-heavy metal pigments. Examples of white pigments which can be utilized in the present invention include metallic pigments such as Polybatch White P8555 SD, available from A. Schulman Inc. and which is identified as a white color concentrate having a coated rutile titanium dioxide concentration of 50% by weight in a propylene homopolymer carrier resin; and Ampacet 110235 which is a white pigmented polyethylene concentrate available from the Ampacet Corporation; and Ampacet 110868. Examples of black pigments useful in the core of the multilayer films of the present invention include various carbon blacks and organic concentrates such as Ampacet 190303 which is a black pigmented polyethylene resin concentrate, and Ampacet 190671A, another black pigmented resin concentrate from Ampacet Corporation. The pigments included in the core of the multilayer films of the present invention may be selected to provide a gray color to the core. The gray color may be obtained from a suitable compounded mixture of white and black to provide the desired shade of gray. Examples of a commercially available gray concentrate are Ampacet 190697 and Ampacet 190870. Other color pigments can be utilized to provide an opaque core having the desired opacity and color. Examples of organic pigment concentrates that can be utilized in the core include Ampacet 150623, a red pigmented polyethylene resin concentrate; Ampacet 150380, a red pigment concentrate, Ampacet 150703 Red PE MB; Ampacet 150623 Red UV PE MB; Ampacet 130283 Yellow UV PE MB; Ampacet 140085 Orange PE MB; Ampacet Dark Green 170560; Ampacet Olympic Blue 160972; and Ampacet Sapphire Blue 160904. An example of a heavy metal containing pigment useful in the core of the multilayer film of the present invention is Ampacet LP20631 Orange PE MB which is identified as a lead molybdate/lead chromate pigment concentrate. In one embodiment, the pigment may be added to the core material in the form of a concentrate containing the pigment in a resin carrier. The concentrate may contain, for example, from 20% to 80% of pigment and from 20% to 80% by weight of resin carrier. The resin carrier can be any thermoplastic polymer having a melting point in the range of from about 70°C or 75°C to about 175°C. Examples include polyolefins such as polyethylene, polypropylene, polybutylene, etc., and functional copolymers such as ethylene-methacrylate copolymers, ethylene-vinyl acetate copolymers and ethylene acrylic acid copolymers, etc.

In one embodiment, the core utilized in the multilayer films of the present invention also may contain at least one processing aid which is useful in facilitating extrusion. Examples of useful processing aids include flurorine-containing polymers such as e. g. hexafluorocarbon polymers. An example of a commercially available processing aid is Ampacet 10919 which is a product of Ampacet Corporation and is identified as a hexafluorocarbon polymer. Another useful processing aid is Ampacet 401198. The processing aids, when used, are typically included at concentrations of up to about 1.5% or from about 0.5% to about 1.2% by weight.

In another embodiment, the core may comprise in addition to the thermoplastic polymers, pigments, etc. described above, reclaimed or scrap thermoplastic materials, including reclaimed opaque thermoplastic materials. Reclaimed scrap or trimmings from previously coextruded films of the invention can be reground and combined with the virgin material used to form the core. In one embodiment, up to about 20% or even 90% by weight of reground trim scrap or reprocessed trim scrap in a form of re-pelletized trim scrap or just scrap pellets can be included in the core. In another embodiment; from about 1% to about 20% by weight of reclaimed scrap can be included in the core. The reground scrap serves as an inexpensive filler.

As noted above, the coextruded multilayer films of the present invention contain, in addition to (A) an opaque thermoplastic polymer core having a first outer surface and a second outer surface, (B) a first pigmented color layer overlying the core, and (C) a second pigmented color layer underlying the core wherein the composition of the core is different from the compositions of the first and second color layers, and the first and second color layers are not white, black or gray. The first and second pigmented color layers can comprise one or more thermoplastic polymers, as described hereinabove for the core, and one or more pigments, as described hereinabove for the core, provided that the color of the first and second pigmented color layers are not white, black or gray. Accordingly, the first and second pigmented color layers may be, for example, red, blue, yellow, green, orange, etc. Any of the thermoplastic polymers (and combinations thereof) described above as useful in the core may be utilized in forming the first and second pigmented color layers. Thus the thermoplastic polymer of these color layers may comprise one or more polyolefins with or without a second thermoplastic polymer (e.g., EVA) as described for the core.

Any of the color pigments described above as being useful in the core (except for white, black and gray) may be utilized in the first and second pigmented color layers, and the amounts of pigment included in the first and second pigmented color layers is an amount which provides the desired color and hue to the layers. In one embodiment of the invention, the colors of the first and second pigmented color layers are the same. In another embodiment of the invention, the colors of the first and second pigmented color layers are different. Specific examples of opaque three layered films in accordance with one embodiment of the present invention include films having: a black core and red layers on both sides; a white core with red layers on both sides; gray core with red layers on both sides, a white or gray or black core with a red color layer on one side and a green color layer on the other side; etc. The color of the film can be varied in terms of lightness, redness and greenness, and blueness and yellowness by varying the amount and type of pigment in an opaque core, the amount and type of pigment in pigmented color layers, and the thickness of the pigmented color layers.

In several embodiments of the invention, the inventive film can range in thickness from 0.5 to 12 or 16 mils, 1 to 10 mils, 1 to 8 mils, 3 to 6 mils, 2 to 5 mils, or 1 to 2.5 mils. The thickness of the component layers of the inventive film can also vary. In one embodiment of this invention the core is thicker than the first or the second pigmented color layer, and in another embodiment of the invention the thickness of the core is about equal to or less than the thickness of the first or second pigmented layer. In several embodiments of the present invention the thickness of the core can range from 0.25 to 10 mils, 0.5 to 6 mils, 1 to 4 mils, or 0.25 to 0.75 mil. In several other embodiments of the invention the thickness of the first or the second pigmented color layer can range from 0.1 to 3 mils, 0.2 to 2 mils, or 0.3 to 1 mil.

The core of the multilayer film of the present invention may comprise a monolayer or multilayers where the multilayers are 2 or more layers. The multilayer film of the present invention, which comprises an opaque thermoplastic polymer core and first and second pigmented color layers on either side of the core, may be prepared by using techniques well known to those skilled in the art to include extrusion, coextrusion, lamination, coating, and any combination of the foregoing techniques. In one embodiment, the inventive film can be prepared by extrusion or coextrusion at temperatures between about 175°C up to about 550°C, or from about 200°C to about 250°C. The inventive film can also be oriented or nonoriented. The oriented film can be uniaxially oriented or biaxially oriented. The uniaxially oriented film can be machine direction oriented. The oriented film can also be heat set (annealed) or can be heat set to provide for dimensional stability of the film if the film is exposed to heat (temperatures above ambient) during further processing and/or service conditions. In several embodiments of this invention, the inventive multilayer film can be prepared by coextrusion and nonoriented, or can be prepared by coextrusion and uniaxially oriented in the machine direction and heat set to provide for dimensional stability.

The multilayer film of the present invention can also comprise one or two skin layers. The inventive film can comprise a first and/or second skin layers overlying the first and/or second pigmented color layers, respectively. An embodiment of this invention is illustrated in Fig. 2. The multilayer film 20 of Fig. 2 comprises a core 11, a first color layer 12 overlying and in contact with the core, a first skin layer 14 overlying and in contact with the first color layer 12, a second color layer 13 underlying and in contact with the core 11, and a second skin layer 15 underlying and in contact with the second color layer 13. The thickness of each of the skin layers.can be from 0.1 to 3 mils, or from 0.1 to 0.4 or 0.5 mil. In one embodiment, at least one of the skin layers is characterized as comprising an abrasion and scuff resistant polymer. The abrasion and scuff resistant polymer not only provides the inventive multilayer film with enhanced abrasion and scuff resistance properties, but also provides the film with excellent sign cutting or die cutting, adhesive (adhesion of adhesive to an adhesive skin layer), weeding, and printing performance. The term weeding is used to indicate the removal of film trim from a die cut label or sign composite of film, adhesive and release liner. In embodiments of the invention, at least one of the skin layers is transparent, or both skin layers are transparent. The term "transparent" as used herein is used to indicate that it is possible to see through the layer, and transparent layers are those through which graphics may be read. When it is desired that the first and/or second skin layers be abrasion and scuff resistant, the layer can comprise one or more thermoplastic polymers that exhibit polymer abrasion and scuff resistance. Useful polymers for improving abrasion and scuff resistance can comprise any of the hereinabove described second thermoplastic polymers that can be in the core to include an alkene-vinyl carboxylic acid ester copolymer, an alkene-unsaturated carboxylic acid or anhydride copolymer, an ionomer derived from a metal and an alkene-unsaturated carboxylic acid or anhydride copolymer, an alkene-alkyl unsaturated carboxylic acid ester copolymer, or any combination of the foregoing copolymers. In an embodiment of the invention the first skin layer overlying the first pigmented color layer can be an abrasion resistant layer where the abrasion resistant skin layer can comprise an ionomer derived from sodium, lithium and/or zinc and ethylene-unsaturated carboxylic acid or anhydride copolymer; an ethylene-acrylic acid copolymers; an ethylene-methacrylic acid copolymer; an ethylene-vinyl acetate copolymer; an ethylene-methyl acrylate copolymer; an ethylene-methyl methacrylate copolymer; or any combination of the foregoing copolymers. Skin layers comprising the abrasion and scuff resistant polymers are printable with inks using techniques such as flexographic printing (solvent or UV), screen printing (solvent and UV), UV curable and solvent inkjet printing, offset lithographic, letter press and thermal transfer, and the applied ink exhibits acceptable adhesion to the surface of the skin layer. The concentration of the abrasion and scuff resistant thermoplastic polymers in the skin layers of the multilayer films of the present invention can be generally at least about 45% by weight, or at least about 60% by weight based on the overall weight of the transparent layer. In other embodiments, the concentration may be as high as 80% or even 95% by weight of the abrasion and scuff resistant polymer. The skin layers or transparent skin layers can comprise one or more of the polyolefins described hereinabove that can be included in the core. The inventive skin layer or skin layers can comprise a polyolelin homopolymer, a polyolefin copolymer, or any combination of the foregoing polymers. The inventive skin layer or layers can comprise a polyethylene homopolymer and/or copolymer, a polypropylene homopolymer and/or copolymer, or any combination of the foregoing polymers. When present in a skin layer, the polyolefin can be present in a major amount of greater than 45% by weight, or can be present in a minor amount of from 3% to about 45% or from about 5% to about 25% by weight. In another embodiment, one or both of the first and second skin layers may comprise one or more polyolefin homopolymers and/or copolymers such as low density polyethylene, linear low density polyethylene, single site catalyzed linear low density polyethylene, medium density polyethylene, linear medium density polyethylene, single site catalyzed liner medium density polyethylene, high density polyethylene, homo polypropylene and copolymers of propylene when abrasion and scuff resistance is not desired or required. For example, one of the skin layers may function as an adhesive skin layer (layer to which the adhesive is adhered) and such layers, in one embodiment, will comprise adhesive compatible polymers or resins which can include ethylene based polyolefins and/or abrasion and scuff resistant polymers such as e. g. a polyethylene homopolymer and/or copolymer and/or an ionomer. Any of the polyolefins, ethylene α-olefin copolymers, or copolymers of ethylene with functional comonomers such as acrylic acid, methacrylic acid, vinyl acetate, methyl acrylate, ethyl acrylate, or terpolymers such as ethylene-vinyl acetate-maleic anhydride or ethylene-vinyl acetate-acrylic acid, etc. including those described above may be used in the adhesive skin layer. The inventive skin layer or layers may include, in addition to the above adhesive resins, one or more polyolefins. In one embodiment, the adhesive skin layer includes a blend of polyolefin and an adhesive polymer. The polyolefin may be present in an amount of from about 50% to about 95% or from about 65% to about 85% by weight, and the adhesive polymer is present in an amount of from about 5% up to about 45%, or from about 15% to about 35% by weight. In several embodiments of the invention the inventive skin layer or layers can comprise a polyolefin such as e. g. a medium density polyethylene, an abrasion and scuff resistant polymer such as e. g. an ionomer as described hereinabove, or any combination of the foregoing polymers. In an embodiment of the invention a first skin layer overlying a first pigmented color layer comprises an abrasion and scuff resistant thermoplastic polymer and a second skin layer overlying a second pigmented color layer comprises an adhesive polymer or adhesive compatible polymer.

The layers of the inventive film can also comprise one or more light stabilizers comprising an ultraviolet (UV) light absorber and/or other light stabilizers. In several embodiments of the invention one or both skin layers, one or both pigmented color layers, or any combination of the foregoing layers can each comprise one or more light stabilizers. The one or more light stabilizers can be present in each of the layers of the inventive film on a weight basis at 1,000 to 20,000 ppm (parts per million). Useful light stabilizers can include hindered amine light stabilizers. Hindered amine light stabilizers are described in the literature such as in U.S. Patent 4,721,531, columns 4 to 9. The hindered amine light stabilizers may, for example, be derivatives of 2,2,6,6-tetraalkyl piperidines or substituted piperizinediones. A number of hindered amine light stabilizers useful in the invention are available commercially such as from Ciba-Geigy Corporation under the general trade designations "Tinuvin" and "Chemissorb", and from Cytec under the general designation "Cyasorb-UV." Examples include Tinuvin 783 which is identified as a mixture of poly [[60[(1,1,3,3,-tetramethyl butyl) amino]-1,3,5-triazine-2,4-diyl][[2,2,6,6-tetramethyl-4-piperidyl) imino] hexamethylene [(2,2,6,6-tetramethyl-4-piperidyl) imino]] and dimethyl succinate polymer with 4-hydroxy-2,2,6,6-tetramethyl-1-piperidineethanol; Tinuvin 770 which is identified as bis-(2,2,6,6-tetramethyl-4-piperidinyl)-sebacate; Tinuvin 765 which is identified as bis-(1,2,2,6,6-pentamethyl-4-piperidinyl)-sebacate; Tinuvin 622 which is a polyester of succinic acid and N-beta-hydroxy ethyl-2,2,6,6-tetramethyl-4-hydroxy-piperidine; and Chemissorb 944 which is poly[6-(1,1,3,3-tetramethylbutyl) amino]-s-triazine-2,4-diy[[2,2,6,6-tetramethyl-4-piperidyl)imino] hexamethylene (2,2,6,6-tetramethyl-4-piperidyl)imino]. A useful stabilizer is available under the tradename Ampacet 10561 which is identified as a UV stabilizer concentrate containing 20% by weight of a UV stabilizer and 80% by weight of a low density polyethylene carrier resin; the UV stabilizer in this product is Chemissorb 944. Useful light stabilizers are also provided in Ampacet 150380 and Ampacet 190303, both of which are color pigment concentrates discussed above. Ampacet 1.50380 has a UV stabilizer concentration of 7.5% by weight. Ampacet 190303 has a UV stabilizer concentration of 4% by weight. The UV stabilizer in each of these products is Chemissorb 944. Ampacet LR-89933 is a grey concentrate having a UV stabilizer concentration of 4.5% by weight, the UV stabilizer being Tinuvin 783.

The skin layers also may contain antiblock and/or slip additives. These additives reduce the tendency of the film to stick together when it is in roll form. The antiblock additives include natural silica, diatomaceous earth, synthetic silica, glass spheres, ceramic particles, etc. The slip additives include primary amides such as stearamide, behenamide, oleamide, erucamide, and the like; secondary amides such as stearyl erucamide, erucyl erucamide, oleyl palimitamide, stearyl stearamide, erucyl stearamide, and the like; ethylene bisamides such as N,N□-ethylenebisstearamide, N,N□-ethylenebisolamide and the like; and combinations of any two or more of the foregoing amides. An example of a useful slip additive is available from Ampacet under the trade designation 10061; this product is identified as a concentrate containing 6% by weight of a stearamide slip additive. The antiblock and slip additives may be added together in the form of a resin concentrate. An example of such a concentrate is available from DuPont under the tradename Elvax CE9619-1. This resin concentrate contains 20% by weight silica, 7% by weight of an amide slip additive, and 73% by weight of Elvax 3170 (a product of DuPont identified as an ethylene/vinyl acetate copolymer having a vinyl acetate content of 18% by weight). The antiblock additive can be used at a concentration in the range of up to about 1% by weight, and in one embodiment about 0.01% to about 0.5% by weight. The slip additive can be used at a concentration in the range of up to about 1% by weight, and in one embodiment about 0.01% to about 0.5% by weight. Another use for slip additives is to impart scuff resistance to the surface of the skin layer. When these materials are incorporated in the skin layer, these materials will migrate to the surface of the skin layer. Alternatively, slip additives can be applied or coated to the top of the skin layer. The slip additive can be incorporated into the skin layer as a polyethylene concentrate or by direct feeding of these additives through the ports of the skin extruder.

As noted, in one embodiment, the coextruded multilayer films of the present invention may comprise:
(A) an opaque core having a first outer surface and a second outer surface, and comprising at least one thermoplastic polymer and white, black or a compounded mixture of white and black pigments;
(B) a first pigmented color layer overlying the core and having a first surface and a second surface; and
(C) a second pigmented color layer underlying the core and having a first and second surface,
wherein the composition of the core is different from the compositions of the first and second color layers, and the first and second color layers are not white, black or gray. In one embodiment, the first and second pigmented color layers are in direct contact with the first and second outer surfaces of the core, respectively. In other embodiments, intermediate or tie layers or adhesion promoting layers may be incorporated between the outer surface of the core and the pigmented color layers. In an embodiment of this invention the inventive film comprises a core comprising a compounded mixture of white and black pigments, first and second pigmented color layers overlying the outer surfaces of the core where the color layers are the same in color and the color layers are not white, gray or black, and first and second skin layers overlying the surfaces of the first and second pigmented layers respectively where the skin layers are transparent.

In one embodiment, the core of the multilayer film described immediately above comprises a multilayer film comprising a black or gray base layer and white intermediate layers on both surfaces of the base layer. Thus, the multilayer film of this embodiment comprises at least five layers: a three layer core containing a central black or gray base layer and white intermediate layers overlying or in contact with both surfaces of the base layer; and first and second pigmented color layers overlying the two white intermediate layers. Through the use of the black or gray base layer and the white intermediate layers on both surfaces of the base layer, an opaque multilayer film having colored outer surfaces (same or different color) can be prepared having the desired opacity, thickness, color and hue while using reduced amounts of the color pigments which are more expensive than the black and white pigments used in the base and intermediate layers. Also, it has been observed that the color of the color layers can be shifted and controlled as desired by varying the shade of the core from white to various shades of gray to black. This embodiment is illustrated in Fig. 3 where multilayer film 30 comprises base layer 16, a first intermediate layer 17 overlying the base layer 16, a first pigmented color layer 12 overlying the first intermediate layer 17, a second intermediate layer 18 underlying the base layer 16, and a second pigmented color layer 13 underlying the second intermediate layer 18. In the embodiment illustrated in Fig. 3, the base layer 16, first intermediate layer 17 and second intermediate layer 18 comprise the three layer core 11.

In another embodiment, first and/or second skin layers may be applied over the first and second pigmented color layers, respectively, of the above described five layer film thereby producing a seven layer film as illustrated in Fig. 4. The film 40 of Fig. 4 comprises base layer 16, first intermediate layer 17 overlying the base layer 16, first color layer 12 overlying the first intermediate layer 17, first skin layer 14 overlying the first color layer 12, second intermediate layer 18 underlying base layer 16; second color layer 13 underlying the second intermediate layer 18, and second skin layer 15 underlying the second color layer 13. In one embodiment, one or both of the skin layers is transparent. In another embodiment, one or both of the skin layers may comprise abrasion and scuff resistant polymers or adhesive resins as described above. Accordingly, any of the skin layers described above may be utilized in this embodiment.

The multilayer films of the invention, whether three layers, five layers, seven layers, or more, can be prepared by coextrusion using coextrusion techniques well known to those skilled in the art. In one embodiment, the coextruded film is not oriented, and in other embodiments, the coextruded film may be oriented in the machine direction only, or oriented in both the machine and the transverse directions, and thereafter annealed or heat set.

The following examples are provided to illustrate the multilayer films of the present invention. Unless otherwise indicated in the examples and elsewhere in the written description and claims, all parts and percentages are by weight, degrees are in centigrade and pressure is at or near atmospheric pressure. The multilayer films illustrated in the following examples are prepared by coextrusion.

### Example 1 (not according to the invention)

### Core (0.50 mil)

2% Ampacet Black 190671A
25% Equistar EVA 242F
72% Huntsman MDPE PE-1080
1% Ampacet Process Aid Conc. 10919

### First Color Layer (0.6 mil)

20% Ampacet White 110868
25% AT Plastics EVA 1821
54% Huntsman MDPE PE-1080
1 % Ampacet Process Aid Conc. 10919

### Second Color Layer (0.6 mil)

2% Ampacet Black 190671 A
25% Equistar EVA 242F
72% Huntsman MDPE PE-1080
1 % Ampacet Process Aid Conc. 10919

### Example 2 (not according to the invention)

### Core (0.50 mil)

2% Ampacet Black 190671 A
25% Equistar EVA 242F
72% Huntsman MDPE PE-1080
1% Ampacet Process Aid Conc. 10919

### First Color Layer (0.6 mil)

20% Ampacet White 110868
25% AT Plastics EVA 1821
54% Huntsman MDPE PE-1080
1% Ampacet Process Aid Conc. 10919

### Second Color Layer (0.6 mil)

2% Ampacet Black 190671A
25% Equistar EVA 242F
72% Huntsman MDPE PE-1080
1% Ampacet Process Aid Conc. 10919

### First skin layer (0.25 mil-transparent)

94% Surlyn 9120
5% Ampacet UV Concentrate 10561
1 % Ampacet Process Aid Conc. 10919

### Second Skin Layer (0.25 mil-transparent)

63% Huntsman MDPE PE-1080
35% Equistar EVA 242F
1% Ampacet UV Conc. 10561
1 % Ampacet Process Aid Conc. 10919

### Example 3

### Core

### Base Layer (0.5 mil)

72% Huntsman MDPE PE-1080
25% Equistar EVA 242F
2% Ampacet Black 190671 A
1% Ampacet Process Aid Conc. 10919

### First Intermediate Layer (0.6 mil)

54% Huntsman MDPE PE-1080
25% AT Plastics EVA 1821
20% Ampacet white 110868
1% Ampacet Process Aid Conc. 10919

### Second Intermediate Layer (0.6 mil)

54% Huntsman MDPE PE-1080
25% AT Plastics EVA 1821
20% Ampacet white 110868
1% Ampacet Process Aid Conc. 10919

### First Color Layer (0.65 mil)

45% Ampacet Cardinal Red 150623
28% Huntsman MDPE PE-1080
25% Equistar EVA 242F
1% Ampacet UV Conc. 10561
1% Ampacet Process Aid Conc. 10919

### Second Color Layer (0.65 mil)

45% Ampacet Cardinal Red 150623
28% Huntsman MDPE PE-1080
25% Equistar EVA 242F
1% Ampacet UV Conc. 10561
1% Ampacet Process Aid Conc. 10919

### Example 4

### Core (0.5 mil)

72% Huntsman MDPE PE-1080
25% Equistar EVA 242F
2% Ampacet Gray LR-89933
1% Ampacet Process Aid Conc. 10919

### First Color Layer (0.4 mil)

45% Ampacet Cardinal Red 150623
28% Huntsman MDPE PE-1080
25% Equistar EVA 242F
1% Ampacet UV Conc. 10561
1% Ampacet Process Aid Conc. 10919

### Second Color Layer (0.4 mil)

45% Ampacet Cardinal Red 150623
28% Huntsman MDPE PE-1080
25% Equistar EVA 242F
1% Ampacet UV Conc. 10561
1% Ampacet Process Aid Conc. 10919

### First Skin Layer (0.25 mil-transparent)

94% Primacor 1420 Resin
5% Ampacet UV Conc. 10561
1% Ampacet Process Aid Conc. 10919

### Second Skin Layer (0.25 mil-transparent)

63% Huntsman MDPE PE-1080
35% Equistar EVA 242F
1% Ampacet UV Conc. 10561
1% Ampacet Process Aid Conc. 10919

### Example 5

### Core

### Base Layer (0.5 mil)

72% Huntsman MDPE PE-1080
25% Equistar EVA 242F
2% Ampacet Black 190671A
1% Ampacet Process Aid Conc. 10919

### First Intermediate Layer (0.6 mil)

54% Huntsman MDPE PE-1080
25% Equistar EVA 242F
20% Ampacet White 110868
1% Ampacet Process Aid 10919

### Second Intermediate Layer (0.6 mil)

54% Huntsman MDPE PE-1080
25% Equistar EVA 242F
20% Ampacet White 110868
1% Ampacet Process Aid 10919

### First Color Layer (0.4 mil)

45% Ampacet Cardinal Red 150623
28% Huntsman MDPE PE-1080
25% Equistar EVA 242F
1% Ampacet UV Conc. 10561
1% Ampacet Process Aid Conc. 10919

### Second Color Layer (0.4 mil)

45% Ampacet Cardinal Red 150623
28% Huntsman MDPE PE-1080
25% Equistar EVA 242F
1% Ampacet UV Conc. 10561
1% Ampacet Process Aid Conc. 10919

### First Skin Layer (0.25 mil-transparent)

94% Primacor 1420 Resin
5% Ampacet UV Conc. 10561
1% Ampacet Process Aid Conc. 10919

### Second Skin Layer (0.25 mil-transparent)

63% Huntsman MDPE PE-1080
35% Equistar EVA 242F
1% Ampacet UV Conc. 10561
1% Ampacet MDPE PE-1080

### Example 6

### Core (1.73 mils)

64% Huntsman PE-1080
18% Ampacet Gray Conc. LR 96896
17% Simulated Reground Trim Scrap
1% Ampacet Process Aid Conc. 10919

### First Color Layer (0.53 mil)

40% AT Plastics EVA 1821
39% Huntsman PE-1821
20% Ampacet Spectra Red Conc. 150678
1% Ampacet Process aid Conc. 10919

### Second Color Layer (0.53 mil)

40% AT Plastics EVA 1821
39% Huntsman PE-1821
20% Ampacet Spectra Red Conc. 150678
1% Ampacet Process aid Conc. 10919

### First Skin Layer (0.11 mil-transparent)

97% DuPont Surlyn 9120
2% Ampacet UV Conc. 10561
1% Ampacet Process Aid 10917

### Second Skin Layer (0.11 mid-transparent)

97% DuPont Surlyn 9120
2% Ampacet UV Conc. 10561
1% Ampacet Process Aid 10917

In one embodiment, the inventive multilayer film is provided as part of an adhesive composite where the film also comprises an adhesive layer adhered or attached to an outer surface of the film where the outer surface can in general be a skin layer. In another embodiment the above described adhesive composite also comprises a release liner adhered or attached to the adhesive layer. A release liner may comprise a backing liner and a layer of cured release coating layer adhered to the backing liner. The release coating is positioned between the adhesive and the backing liner. In an embodiment, the adhesive layer is positioned between a second skin layer of the multilayer thermoplastic film and a release liner or between a second skin layer and a release coating of a release liner. The adhesive layer is preferably adherent or attached to a skin layer comprising adhesive compatible polymers. A useful embodiment is depicted in Fig. 5. Referring to Fig. 5, an adhesive composite 50 is illustrated which includes the multilayered thermoplastic film 20 of Fig. 2 to which adhesive layer 21 and release liner 22 have been added. The adhesive layer 21 underlies and is in contact with second skin layer 15, and the release liner 22 underlies and is in contact with the adhesive layer 21. The adhesive layer may be directly coated on the skin layer of the multilayer film of the invention, or the adhesive layer may be transferred from a release liner with which the multilayer film is combined. Alternatively, a composite of the multilayer film and the adhesive layer can be formed by coextrusion of the film and the adhesive. In one embodiment, the adhesive layer has a thickness in the range of from about 0.1 to about 2 mils (2.5 to 50 microns). Adhesives suitable for use in the adhesive composites of the present invention are commonly available in the art, and these adhesives include pressure sensitive adhesives (PSA) heat-activated adhesives, hot melt adhesives, etc. Heat activated adhesives are materials that become tacky when heated which allows the composite to bond to a substrate. Materials useful for this purpose include but are not limited to the following film forming materials used alone or in combination: polyethylene, metallocene catalyzed polyolefins, syndiotactic polystyrene, syndiotactic polypropylene, cyclic polyolefins, polyethylene ethyl acrylate copolymers, ethylene methyl acrylate copolymers, ABS polymers, ethylene vinyl alcohol copolymers, polybutylene, polystyrene, ethylene-vinyl acetate-maleic anhydride terpolymers, ethylene-vinyl acetate-acrylic acid terpolymers, ethylene-methylacrylate acrylic acid terpolymers, etc. In one embodiment, the adhesive is a pressure sensitive adhesive. Any of the pressure sensitive adhesives known in the art can be utilized, and these include rubber based adhesives, acrylic adhesives, vinyl ether adhesives, silicone adhesives, and mixtures of two or more thereof. A number of pressure sensitive adhesive materials are described in "Adhesion and Bonding", Encyclopedia of Polymer Science and Engineering, Volume 1, pages 476-546, Interscience Publishers 2nd Ed. 1985. Other materials in addition to the foregoing polymers and resins may be included in the pressure sensitive adhesive materials. These include solid tackifying resins, liquid tackifiers (often referred to as plasticizers), antioxidants, fillers, pigments, waxes, etc. The adhesive materials may contain a blend of solid tackifying resins and liquid tackifying resins.

In one embodiment, the release liners utilized in the invention comprise a backing layer having a release coating on one surface thereof. A variety of release coatings are known in the art and these include silicone release coating compositions. The backing liner can comprise paper, a monolayered or multilayered polymeric film including a film which has been coextruded or coextruded and oriented, or combinations thereof. Examples of polymer films include polyolefin films, polyester films, and combinations thereof. Polycoated paper liners that have one side of the liner coated with a silicone release material also are useful. In one embodiment, the polycoating may comprise low density polyethylene, medium density polyethylene, ethylene propylene copolymer, propylene homopolymer, etc.

The present invention also comprises a method to vary the color of the outer surfaces of the inventive film as described throughout this application and as depicted in Figures 1-5. The color of each surface of the inventive film can be varied in terms of lightness, redness and greenness, and blueness and yellowness. In embodiments of the invention the colors of the two surfaces of the film can be the same or can be different. The color of a surface of the inventive film can be varied greatly across the color spectrum by varying the type and amount of pigment in an opaque core, varying the type and amount of pigment in a pigmented color layer, and varying the thickness of the pigmented color layer. In an embodiment of the invention the color of a surface of the inventive film can be varied in a narrow color range, e. g. for a certain type of color such as a type of red color, by varying the type and amount of pigment in an opaque core layer for a given pigmented color layer where the given color layer has a fixed amount and type of pigment and a fixed thickness. An advantage of the present invention is that for a given number of commercially available pigments, a much greater number of colors are obtainable across the color spectrum and for a narrow color range by respectively varying both the core and color layer or varying the core for a given color layer. Further advantages of the present invention are that when the core is limited to low cost pigments in the color range from white through gray to black and either the core and color layer are varied or just the core is varied for a given color layer, a greater number of colors are obtainable relative to the number of commercially available pigments and at a reduced cost relative to a film having a single pigmented and opaque layer. The inventive film reduces cost by placing expensive pigments in pigmented color layers and less expensive pigments in an opaque core so that less of the expensive pigments is needed to obtain a desired color. In an embodiment of the invention, a method to vary the color of the outer surfaces of a multilayered opaque film comprises providing an opaque multilayered film as defined in the claims comprising (A) an opaque core having a first outer surface and a second outer surface, and comprising at least one thermoplastic polymer and white, black, or a compounded mixture of white and black pigments; (B) a first pigmented color layer overlying the core and having a first surface and a second surface; and (C) a second pigmented color layer underlying the core and having a first surface and a second surface wherein the composition of the core is different from the compositions of the first and second pigmented color layers, the first and second color layers are not white, black or gray, and the multilayer film has an opacity of at least 75%; and wherein the shade or lightness of the core is varied from white to black. In further embodiments of the invention for this method of varying the shade or lightness of the core from white to black, the first and second color layers can be held constant in type and amount of pigment and in layer thickness, or the first and second color layers can be varied in type and amount of pigment and layer thickness.

Example 7 demonstrates the color variety and cost advantages of the method of the present invention to vary the color of the outer surfaces of the multilayer films.

### Example 7

Examples 7A-7F are six 5-layered inventive films which are prepared by coextrusion and have the following constructions:
(a) 1.7 mil opaque core containing 12-14% by wt. of progressively darker shades of gray opacifying concentrate (gray 1, 2, 4, 7, 9 and 10),
(b) 0.4 mil color layers containing 20% by wt. of a fire red pigment concentrate on both sides of the core, and
(c) 0.25 mil clear skin layers over the color layers.
Comparative Example 7 is a 3-layered comparative film which is prepared by coextrusion and has the following construction:
(a) 2.5 mil opaque core containing 32% by wt. of the fire red pigment concentrate used in the above 5-layered inventive films, and
(b) two 0.25 mil clear skin layers.
The Hunter Lab color values in Table 1 are measured for the six inventive films of Examples 7A-7F and comparative film Example 7, which used approximately fives times more of the fire red pigment concentrate than the inventive films, using a Hunter Lab MiniScan XEPlus Model No. 4500L unit according to ASTM Test Method E308. The Delta E values are calculated from the L, a and b values, and a Delta E value equal to or below about 2.3 is an indication of a color match between an inventive film and the comparative film. As can be seen from the result reported in Table 1, Example 7C provides a match for the film of comparative Example 7. The other Delta E values reported in Table 1 demonstrate that different shades of red can be obtained from a single red pigment concentrate in the films of the invention by varying the color, or shade of the core layer.

**Table 1**

| Hunter Lab Color Values | | | | | |
|---|---|---|---|---|---|
| 5-Layered vs. 3-Layered Films | | | | | |
| Example | Film Type | L Value | a Value | b Value | Delta E Value |
| 7A | 5-layer, gray 1 | 29.6 | 55.5 | 17.4 | 4.1 |
| 7B | 5-layer, gray 2 | 28.9 | 53.0 | 16.7 | 3.2 |
| 7C | 5-layer, gray 4 | 26.4 | 46.8 | 15.3 | 1.3 |
| 7D | 5-layer, gray 7 | 25.1 | 42.3 | 13.3 | 3.3 |
| 7E | 5-layer, gray 9 | 21.8 | 33.6 | 11.5 | 6.7 |
| 7F | 5-layer, gray 10 | 22.9 | 37.0 | 12.9 | 5.4 |
| Comparative 7 | 3-layer | 26.9 | 47.9 | 15.6 | 0.0 |

While the invention has been explained in relation to specific embodiments, various modifications thereof will become apparent to those skilled in the art upon reading this application. It is understood that these various modifications, which fall within the scope of this detailed description and the appended claims, form a part of this invention.

## Claims

1. A coextruded opaque multilayer film having an opacity of at least 75%, comprising:
(A) an opaque thermoplastic polymer core having a first outer surface and a second outer surface and comprising at least one pigment;
(B) a first pigmented color layer overlying the core and having a first surface and a second surface and comprising at least one organic pigment; and
(C) a second pigmented color layer underlying the core and having a first surface and a second surface and comprising at least one organic pigment
wherein the composition of the core is different from the compositions of the first and second color layers, the first and second color layers are not white, black or gray, and the coextruded film is not oriented.

2. The film of claim 1 wherein the first and second pigmented color layers are in contact with the outer surfaces of the core.

3. The film of claim 1 wherein the core comprises multilayers.

4. The film of claim 1 wherein the core comprises a monolayer.

5. The film of claim 1 also comprising first and/or second skin layers overlying the first and/or second pigmented color layers, respectively.

6. The film of claim 1 wherein the colors of the first and second pigmented color layers are the same.

7. The film of claim 5 wherein the first skin layer overlying the first pigmented color layer is an abrasion resistant thermoplastic layer.

8. A coextruded opaque multilayer film having an opacity of at least 75%, comprising:
(A) an opaque core having a first outer surface and a second outer surface, and comprising at least one thermoplastic polymer and white, black, or a compounded mixture of white and black pigments;
(B) a first pigmented color layer overlying the core and having a first surface and a second surface and comprising at least one organic pigment; and
(C) a second pigmented color layer underlying the core and having a first surface and a second surface and comprising at least one organic pigment
wherein the composition of the core is different from the compositions of the first and second color layers, the first and second color layers are not white, black or gray, and the coextruded film is not oriented.

9. The film of claim 8 wherein the first and second pigmented color layers are in contact with the outer surfaces of the core.

10. The film of claim 8 wherein the core comprises multilayers.

11. The film of claim 10 wherein the core comprises (A)(1) a black or gray thermoplastic polymer base layer having a first surface and a second surface, (A)(2) a first white thermoplastic polymer layer having a first surface and a second surface wherein the second surface of (A)(2) overlies the first surface of the base layer, and (A)(3) a second white thermoplastic polymer layer having a first surface and a second surface wherein the first surface of (A)(3) underlies the second surface of the base layer.

12. The film of claim 8 wherein the core comprises a monolayer.

13. The film of claim 8 wherein the core comprises a compounded mixture of white and black pigments.

14. The film of claim 8 also comprising first and/or second skin layers overlying the first and/or second pigmented color layers, respectively.

15. The film of claim 8 wherein the colors of the first and second pigmented color layers are the same.

16. The film of claim 14 wherein the first skin layer overlying the first pigmented color layer comprises an abrasion and scuff resistant thermoplastic polymer.

17. The film of claim 14 wherein the first and second skin layers are transparent.

18. The film of claim 17 wherein the core comprises a compounded mixture of white and black white pigments, and the colors of the first and second pigmented color layers are the same.

19. The film of claim 8 also comprising a layer of adhesive underlying the second pigmented color layer, and a release liner underlying the layer of adhesive.

20. A method to vary the color of the outer surfaces of a multilayered opaque film, comprising:
providing an opaque multilayered film comprising (A) an opaque core having a first outer surface and a second outer surface, and comprising at least one thermoplastic polymer and white, black, or a compounded mixture of white and black pigments; (B) a first pigmented color layer overlying the core and having a first surface and a second surface and comprising at least one organic pigment; and (C) a second pigmented color layer underlying the core and having a first surface and a second surface and comprising at least one organic pigment wherein the composition of the core is different from the compositions of the first and second color layers, the first and second color layers are not white, black or gray, the film has an opacity of at least 75%, the film is prepared by coextrusion and is not oriented; and wherein one or more of the following is varied: the type and amount of pigment in the core, the type and amount of pigment in the color layers, or the thickness of the pigmented color layers.

## Patentansprüche

1. Ein coextrudierter opaker mehrschichtiger Film mit einer Opazität von mindestens 75%, der umfasst:
(A) einen opaken thermoplastischen Polymerkern mit einer ersten Außenfläche und einer zweiten Außenfläche, der mindestens ein Pigment umfasst;
(B) eine erste pigmentierte Farbschicht, die über dem Kern liegt und eine erste Oberfläche und eine zweite Oberfläche hat und mindestens ein organisches Pigment umfasst; und
(C) eine zweite pigmentierte Farbschicht, die unter dem Kern liegt und eine erste Oberfläche und eine zweite Oberfläche hat und mindestens ein organisches Pigment umfasst,
worin die Zusammensetzung des Kerns sich von der Zusammensetzung der ersten und zweiten Farbschichten unterscheidet, die ersten und die zweiten Farbschichten sind nicht weiß, schwarz oder grau, und der coextrudierte Film ist nicht ausgerichtet.

2. Der Film nach Anspruch 1, worin die ersten und die zweiten pigmentierten Farbschichten in Kontakt mit den Außenflächen des Kerns stehen.

3. Der Film nach Anspruch 1, worin der Kern mehrere Schichten umfasst.

4. Der Film nach Anspruch 1, worin der Kern eine Monoschicht umfasst.

5. Der Film nach Anspruch 1, der auch erste und/oder zweite Oberflächenschichten umfasst, die die ersten und/oder zweiten pigmentierten Farbschichten überlagern.

6. Der Film nach Anspruch 1, worin die Farben der ersten und zweiten pigmentierten Farbschichten gleich sind.

7. Der Film nach Anspruch 5, worin die erste Oberflächenschicht, die die erste pigmentierte Farbschicht überlagert, eine abriebfeste thermoplastische Schicht ist.

8. Ein coextrudierter opaker mehrschichtiger Film mit einer Opazität von mindestens 75%, der umfasst:
(A) einen opaken Kern mit einer ersten Außenfläche und einer zweiten Außenfläche, der mindestens ein thermoplastisches Polymer und weiße, schwarze oder eine zusammengesetzte Mischung aus weißen und schwarzen Pigmenten umfasst:
(B) eine erste pigmentierte Farbschicht, die über dem Kern liegt, und eine erste Oberfläche und eine zweite Oberfläche hat und mindestens ein organisches Pigment umfasst; und
(C) eine zweite pigmentierte Farbschicht, die unter dem Kern liegt und eine erste Oberfläche und eine zweite Oberfläche hat und mindestens ein organisches Pigment umfasst,
worin die Zusammensetzung des Kerns sich von der Zusammensetzung der ersten und zweiten Farbschicht unterscheidet, die ersten und die zweiten Farbschichten sind nicht weiß, schwarz oder grau, und der coextrudierte Film ist nicht ausgerichtet.

9. Der Film nach Anspruch 8, worin die ersten und die zweiten pigmentierten Farbschichten in Kontakt mit den Außenflächen des Kerns stehen.

10. Der Film nach Anspruch 8, worin der Kern Mehrfachschichten umfasst.

11. Der Film nach Anspruch 10, worin der Kern (A)(1) eine schwarze oder graue thermoplastische Polymer-Basisschicht mit einer ersten Oberfläche und einer zweiten Oberfläche umfasst, (A)(2) eine erste weiße thermoplastische Polymerschicht mit einer ersten Oberfläche und einer zweiten Oberfläche umfasst, worin die zweite Oberfläche von (A)(2) über der ersten Oberfläche der Basisschicht liegt, und (A)(3) eine zweite weiße thermoplastische Polymerschicht mit einer ersten Oberfläche und einer zweiten Oberfläche, worin die erste Oberfläche von (A)(3) unter der zweiten Oberfläche der Basisschicht liegt.

12. Der Film nach Anspruch 8, worin der Kern eine Monoschicht umfasst.

13. Der Film nach Anspruch 8, worin der Kern eine zusammengesetzte Mischung aus weißen und schwarzen Pigmenten umfasst.

14. Der Film nach Anspruch 8, der auch erste und/oder zweite Oberflächenschichten umfasst, die die ersten und/oder zweiten pigmentierten Farbschichten überlagern.

15. Der Film nach Anspruch 8, worin die Farben der ersten und zweiten pigmentierten Farbschichten gleich sind.

16. Der Film nach Anspruch 14, worin die erste Oberflächenschicht, die die erste pigmentierte Farbschicht überlagert, eine abrieb- und kratzfeste thermoplastische Schicht umfasst.

17. Der Film nach Anspruch 14, worin die ersten und zweiten Oberflächenschichten transparent sind.

18. Der Film nach Anspruch 17, worin der Kern eine zusammengesetzte Mischung aus weißen und schwarzen Pigmenten umfasst und die Farben der ersten und zweiten pigmentierten Schichten gleich sind.

19. Der Film nach Anspruch 8, der auch eine Klebstoffschicht umfasst, die unter der zweiten pigmentierten Farbschicht liegt, sowie eine Trennschicht, die unter der Klebstoffschicht liegt.

20. Ein Verfahren zum Variieren der Farbe der Außenflächen eines mehrschichtigen opaken Films, das umfasst:
Bereitstellen eines opaken mehrschichtigen Films, der umfasst (A) einen opaken Kern mit einer ersten Außenfläche und einer zweiten Außenfläche, der mindestens ein thermoplastisches Polymer und weiße, schwarze oder eine zusammengesetzte Mischung aus weißen und schwarzen Pigmenten umfasst; (B) eine erste pigmentierte Farbschicht, die über dem Kern liegt, und eine erste Oberfläche und eine zweite Oberfläche hat und mindestens ein organisches Pigment umfasst; und (C) eine zweite pigmentierte Farbschicht, die unter dem Kern liegt und eine erste Oberfläche und eine zweite Oberfläche hat und mindestens ein organisches Pigment hat, worin die Zusammensetzung des Kerns sich von der Zusammensetzung der ersten und zweiten Farbschichten unterscheidet, die ersten und die zweiten Farbschichten sind nicht weiß, schwarz oder grau, der Film hat eine Opazität von mindestens 75%, der Film wird durch Coextrudieren hergestellt und ist nicht ausgerichtet; und worin eine oder mehrere der folgenden Größen variiert werden: Pigmenttyp und Pigmentmenge in den Farbschichten, oder die Schichtdicke der pigmentierten Farbschichten.

## Revendications

1. Film multicouches opaque coextrudé ayant une opacité d'au moins 75 %, comprenant :
(A) une âme polymère thermoplastique opaque comportant une première surface extérieure et une seconde surface extérieure et comprenant au moins un pigment ;
(B) une première couche de couleur pigmentée située au-dessus de l'âme et comportant une première surface et une seconde surface et comprenant au moins un pigment organique, et
(C) une seconde couche de couleur pigmentée située au-dessous de l'âme et comportant une première surface et une seconde surface et comprenant au moins un pigment organique,
étant entendu que la composition de l'âme est différente des compositions des première et seconde couches de couleur, que les première et seconde couches de couleur ne sont ni blanches, ni noires, ni grises et que le film coextrudé n'est pas orienté.

2. Film selon la revendication 1 dans lequel la première et la seconde couche de couleur pigmentée sont en contact avec les surfaces extérieures de l'âme.

3. Film selon la revendication 1 dans lequel l'âme comprend plusieurs couches.

4. Film selon la revendication 1 dans lequel l'âme comprend une seule couche.

5. Film selon la revendication 1 comprenant aussi une première et/ou une seconde couche pelliculaire située au-dessus, respectivement, de la première et/ou de la seconde couche de couleur pigmentée.

6. Film selon la revendication 1 dans lequel les couleurs de la première et de la seconde couche de couleur pigmentée sont les mêmes.

7. Film selon la revendication 5 dans lequel la première couche pelliculaire située au-dessus de la première couche de couleur pigmentée est une couche thermoplastique résistant à l'abrasion.

8. Film multicouches opaque coextrudé ayant une opacité d'au moins 75 %, comprenant :
(A) une âme opaque comportant une première surface extérieure et une seconde surface extérieure, et comprenant au moins un polymère thermoplastique et un pigment blanc, noir ou un mélange composé de pigments blanc et noir ;
(B) une première couche de couleur pigmentée située au-dessus de l'âme et comportant une première surface et une seconde surface et comprenant au moins un pigment organique, et
(C) une seconde couche de couleur pigmentée située au-dessous de l'âme et comportant une première surface et une seconde surface et comprenant au moins un pigment organique ;
étant entendu que la composition de l'âme est différente des compositions des première et seconde couches de couleur, que les première et seconde couches de couleur ne sont ni blanches, ni noires, ni grises et que le film coextrudé n'est pas orienté.

9. Film selon la revendication 8 dans lequel la première et la seconde couche de couleur pigmentée sont en contact avec les surfaces extérieures de l'âme.

10. Film selon la revendication 8 dans lequel l'âme comprend plusieurs couches.

11. Film selon la revendication 10 dans lequel l'âme comprend (A)(1) une couche de base polymère thermoplastique blanche ou grise comportant une première surface et une seconde surface, (A)(2) une première couche polymère thermoplastique blanche comportant une première surface et une seconde surface étant entendu que la seconde surface de (A)(2) est située au-dessus de la première surface de la couche de base, et (A)(3) une seconde couche polymère thermoplastique blanche comportant une première surface et une seconde surface étant entendu que la première surface de (A)(3) est située au-dessous de la seconde surface de la couche de base.

12. Film selon la revendication 8 dans lequel l'âme comprend une seule couche.

13. Film selon la revendication 8 dans lequel l'âme comprend un mélange composé de pigments blanc et noir.

14. Film selon la revendication 8 comprenant aussi une première et/ou une seconde couche pelliculaire située au-dessus, respectivement, de la première et/ou de la seconde couche de couleur pigmentée.

15. Film selon la revendication 8 dans lequel les couleurs des première et seconde couches de couleur pigmentées sont les mêmes.

16. Film selon la revendication 14 dans lequel la première couche pelliculaire située au-dessus de la première couche de couleur pigmentée comprend un polymère thermoplastique résistant à l'abrasion et aux éraflures.

17. Film selon la revendication 14 dans lequel les première et seconde couches pelliculaires sont transparentes.

18. Film selon la revendication 17 dans lequel l'âme comprend un mélange composé de pigments blanc et noir, et dans lequel les couleurs des première et seconde couches de couleur pigmentées sont les mêmes.

19. Film selon la revendication 8 comprenant aussi une couche d'adhésif située au-dessous de la seconde couche de couleur pigmentée, et une doublure détachable située au-dessous de la couche d'adhésif.

20. Procédé pour faire varier la couleur des surfaces extérieures d'un film opaque à couches multiples, consistant :
à réaliser un film multicouches opaque comprenant (A) une âme opaque comportant une première surface extérieure et une seconde surface extérieure, et comprenant au moins un polymère thermoplastique et des pigments blanc, noir ou un mélange composé de pigments blanc et noir ; (B) une première couche de couleur pigmentée située au-dessus de l'âme et comportant une première surface et une seconde surface et comprenant au moins un pigment organique, et (C) une seconde couche de couleur pigmentée située au-dessous de l'âme et comportant une première surface et une seconde surface et comprenant au moins un pigment organique étant entendu que la composition de l'âme est différente des compositions des première et seconde couches de couleur, que les première et seconde couches de couleur ne sont ni blanches, ni noires, ni grises, que le film a une opacité d'au moins 75 %, que le film est préparé par coextrusion et n'est pas orienté, et étant entendu que l'on fait varier l'un ou plusieurs des paramètres suivants : le type et la quantité de pigment de l'âme, le type et la quantité de pigment des couches de couleur ou l'épaisseur des couches de couleur pigmentées.
